# EUROPEAN PATENT APPLICATION

(11) **EP 2 355 010 A1**
(43) Date of publication of application: **10.08.2011**
(21) Application number: 10151824.9
(22) Date of filing: 27.01.2010
(51) Int. Cl.: G06K 19/00, G06K 19/077, G06K 7/00, G04G 5/00, H04B 7/26

(54) **Transponder providing integrated time data**

(71) Applicant: Datamars SA, 6930 Bedano-Lugano (CH)
(72) Inventor: Stegmaier, Peter, Dr., 6946 Ponte Capriasca (CH); Pachoud, Damien, 6963 Pregassona (CH)
(74) Representative: Harmann, Bernd-Günther

(57) **Abstract**

The invention relates to a transponder (1) having an integrated circuit including at least a transceiver module and a data storage module for providing data, an antenna connected with the integrated circuit for receiving and transmitting a signal, and a transponder cover.

In the transponder cover, a time signal receiver (50) having a time signal receiver antenna (51) is present, wherein the time signal receiver (50) is designed for deriving time data (52) from an external reference time-signal and providing the time data (52) to the integrated circuit (2).

## Description

The invention relates to a transponder according to the preamble of claim 1 and to a process of providing time data within the transponder according to the preamble of claim 11.

Miniature transponders have been known for a long time, and amongst other things are used for identification, data storage, access control, or safety purposes and further, similar applications. Generically adapted transponders can more particularly be used in the body of a living being. To this end, such transponders are implanted into animals with a hypodermic needle or inserted into the stomach, for instance, and are useful primarily for identifying the animals, in which case they can replace an often obtrusive ID tag worn on the outside. For such transponders to be implantable or insertable, they must have an appropriately miniaturized structure. All their components will then have to be housed, for example, in plastic, glass or ceramic cover. The transponder may have dimensions adapted to the size of the living being. Transponders for birds or mice, for example, may have a size different from that of transponders for cats, dogs, cows, or elephants.

An implantable transponder has for instance been described in the European Patent Application No. 07 116 195.4 entitled "Implantable Miniature Transponder and Method for the Production Thereof".

In principle, such transponders have an integrated circuit, more particularly a chip sitting on a miniature board commonly including at least a transceiver element, a data storage module, and an energy storage module. An antenna transmitting and receiving data that is linked to the circuit is also set up within the transponder. In most cases the antenna is a coil antenna consisting of conductor wire wound up into a coil, and including more particularly a ferrite core arranged within the coil.

Generally, one may distinguish between active, semi-passive, and passive transponders. Active and semi-passive transponders have their own power source, such as a miniature battery. Passive transponders to the contrary do not comprise an integrated power source, hence are less demanding in their production, have a longer lifetime, and can be realized in smaller dimensions.

For reading of a passive transponder, a reader device generates a short-range electromagnetic radiofrequency field. Then not only data are transmitted to the transponder by the radiofrequency field generated close to the transponder but an electric current is also induced in the coil antenna of the transponder, and charges the short-term energy storage module most often consisting of a capacitor. As an answer, the transponder then uses the energy stored in the short-term storage module, for example, to send ID data stored in the data storage module to the reading device, said ID data then being used for further processing or for display to a user.

Regarding half duplex (HDX) transponders, an intermittent field is generated by the reader device. As long as the reader transmits the field the transponder is charged. After that, the reader stops emitting and the transponder (the tag) answers.

Regarding full duplex (i.e. FDX-B) transponders, a durable field must be generated throughout the readout process so as to meet the power needs of the microchip during readout.

Depending on the operating frequency, the reader must emit a radiofrequency field of sufficiently high intensity in order to be able to read the passive transponders at distances that may for instance attain a few decimeters up to few meters.

Active transponders are those where the energy stored in the integrated miniature battery is used as well for transmitting the transponder signal. Here a considerably longer reading range of the signals that are transmitted can be attained than with passive transponders.

In addition, further activities of a transponder such as the acquisition of additional data via a sensor can be supported even in absence of a reader when an internal power supply is available.

In semi-passive transponders, the power source is only used to cover the needs of the integrated circuit, and eventually those of integrated sensors, but not those of data transmission.

A temperature sensor, a humidity sensor, or a radiation sensor are known examples of sensors attached to a transponder for the acquisition of additional data, but so far they have been used essentially in active transponders not implanted. The additional data that are acquired may be stored in a writable data memory in the transponder, and transmitted to a reader when needed.

It has been recognized as a disadvantage, however, that only the sequence of storing of the additional data is available as a time reference. The exact time at which additional data have been acquired by the sensors usually is not provided in the transponder. Some active transponders are provided with an internal clock. However, such a clock module implies disadvantageous continuous power consumption and may deviate from time to time or set to a wrong time.

It is one task of the invention, therefore, to provide an improved transponder that yields exact, integrated time data, particularly one that can be implanted or inserted into animals, e.g. cows.

This task is accomplished by implementing the characterizing features of the independent claims. Features extending the invention in an alternative or advantageous way can be taken from the dependent claims.

The transponder according to the invention that can more particularly be implanted into living beings includes an integrated circuit having at least a transceiver module, a data storage module providing ID data, and especially an energy storage module, said circuit being specifically formed as a microchip. The integrated circuit is connected with an antenna transmitting and receiving signals that advantageously is formed as a coil antenna, particularly one having a ferrite core.

The integrated circuit is set up more particularly as a longitudinal extension of the antenna, so that a compact unit is formed by them that can preferably be housed in a cylindrical transponder cover.

According to the invention, the transponder includes an integrated time signal receiver associated with a time signal receiver antenna such that time signals may be received and time data derived.

The transponder antenna that is present at any rate for data communication with a reader may preferably be used in addition as an antenna for time signal reception so that a separate additional antenna need not be included in the transponder for securing the time data function, and small dimensions can be preserved for easy injection.

A variety of time signal receivers are known per se from the prior art, and are used for example in radio-controlled wristwatches, radio-controlled alarm clocks or miniature MP3 players with FM radio function. Time signal receivers designed to receive a time signal from a so-called time signal service are particularly well suited.

For quite some time now several time signal services are available, commonly free of charge, which broadcast time signal call signs on certain frequencies associated with specific radio stations at various locations. For the transmission of time data, the time signals sent out most commonly are amplitude-modulated, the signal for instance having an amplitude lowered by 25 % at intervals of seconds and offering further information that for instance can be derived from the duration of this amplitude lowering. Several atomic clocks offer the time base for signal modulation in most of these time signal services.

The following are examples of such time signal services (listed with the abbreviated designation of the time signal service, the location, and the transmitter frequency):
- Beta - Russia: 25 kHz
- BPC - China: 68.5 kHz
- BPM - China, Lintong: 2.5 MHz, 5 MHz, 10 MHz, 15 MHz
- CHU - Canada, Ottawa: 3.330 MHz, 7.335 MHz, 14.670 MHz
- DCF77 - Germany, Mainflingen: 77.5 kHz
- HBG - Switzerland, Pragins: 75 kHz
- JJY - Japan, Otakadoya Mountain: 60 kHz
- JJY - Japan, Hagane Mountain: 40 kHz
- MSF - Great Britain, Anthorn: 60 kHz
- OMA - Czech Republic, Prague: 50 kHz
- RBU - Russia, Moscow: 66.66 kHz
- RTZ - Russia, Irkutsk: 50 kHz
- RWM - Russia, Moscow: 4.996 MHz, 9.996 MHz, 14.996 MHz
- WWV - USA, Fort Collins: 2.5 MHz, 5 MHz, 10 MHz, 15 MHz, 20 MHz
- WWVB - USA, Fort Collins: 60 kHz
- WWVH - USA, Hawaii: 2.5 MHz, 5 MHz, 10 MHz, 15 MHz
- YVTO - Venezuela, Caracas: 5 MHz

The time signal receiver present in the transponder may for instance be designed to receive the time signal call sign DCF77 broadcast on a frequency of 77.5 kHz by a long-wave transmitter in Mainflingen, Germany that can be received within a range of up to 2000 km, conditions permitting.

As an alternative to pure time signal services, some traditional radio stations particularly in the FM range broadcast time signals together with the radio signal, and on the same frequency, within the Radio Data System. Thus, a further possibility is given by designing the time signal receiver as a radio signal receiver receiving a Radio Data Systems time signal. True, FM radio signals can only be received within a considerably smaller radius than the long-wave time signals broadcast by pure time signal services, but on the other hand, in many regions on Earth one finds a multitude of radio stations broadcasting a time signal together with the radio signals. The transponder may for instance include an FM receiver having a tunable FM frequency as the time signal receiver, so that with the aid of an automatic station finder a suitable frequency offering a time signal may be found depending on location.

As a further alternative, a Global Navigation Satellite System signal receiver (GNSS-signal receiver) or a Global System for Mobile Communication signal receiver (GSM-signal receiver) may also be used as a time signal receiver able to read the highly precise time data broadcast along with the GNSS-signals respectively the GSM-signals.

The time data that can be derived in an integrated way by the time signal receiver may then be used and/or processed further in different ways depending on the transponder.

Time data may for instance be derived when near the transponder a reader generates a radiofrequency field and the transponder reacting to said field for instance transmits its ID data. The time data derived at this point may more particularly be transmitted to the reader together with the transponder ID, a user then being shown the exact time of readout or the transponder ID being stored in the reader together with the exact time of readout.

During the time that is needed to derive the time data, the time signal must be continuously received, and depending on this time, it may be necessary then in the case of passive transponders that the reader generates the radiofrequency field for the same length of time in order to secure power supply to the time signal receiver.

In semi-passive or active transponders, that is, transponders having an internal power supply, for example, in the form of an integrated energy storage module and/or an integrated current generator, time data can be derived for certain points in time even in absence of a reader. The corresponding energy storage modules such as a battery or a rechargeable energy storage device are known from the prior art. Time data may now be derived more particularly for given points in time, specifically at predefined time intervals or events.

With a transponder having one or several data acquisition elements such as sensors acquiring additional data (measurement data), the times for acquisition of the additional information may now be specified in terms of the time data derived in each such instant, and the additional information then acquired may be stored internally in each case together with the time data derived for it.

According to the invention, then exact time data may be derived and provided for diverse purposes, within the transponder and quite independently of any transponder reader, and particularly in absence of such a reader.

Generally, the data storage module of the transponder may include a write-protected memory such as an EEPROM (electrically erasable programmable read-only memory) able in particular to store transponder ID data, and/or a writable memory for the storage of time data and/or additional data in the data storage module. To this effect the data storage module includes a nonvolatile memory, i.e., a memory holding stored data even without any power supply, such as a FRAM (ferroelectric random-access memory). However, volatile memories requiring uninterrupted power supply such as a SRAM (static random access memory) may also be used.

The transponder cover may consist of glass, plastic or even ceramic, and have an elongated, specifically a cylindrical shape. Yet the transponder cover may also be designed according to any other prior-art design, particularly those designs making it fit for implantation into living beings.

The invention will be explained in greater detail below with reference to examples of possible embodiments shown schematically in the drawings, in which:
- Figure 1: shows an implantable transponder of the prior art;
- Figure 2: shows an embodiment of a transponder according to the invention;
- Figure 3: shows a process of interrogation of a transponder according to the invention, by a reader;
- Figure 4: shows a processing of time signals received and of additional information acquired by data acquisition elements, inside the transponder; and
- Figure 5: shows another process of interrogation of a transponder according to the invention, by a reader.

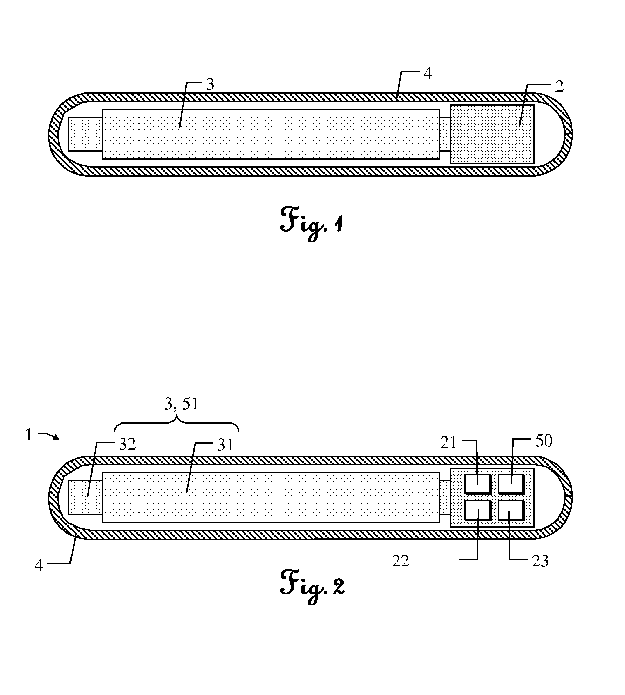

Figure 1 shows a passive transponder of the prior art suitable for implantation in living beings, in a longitudinal section. It includes an integrated circuit 2 designed as a microchip, which could exemplarily be supported by a miniaturized board. The integrated circuit 2 is arranged in longitudinal extension of an antenna 3 designed as a coil antenna with ferrite core, such that the integrated circuit 2 and antenna 3 may advantageously be housed in an elongated cylindrical transponder cover 4. The functioning of such a transponder has already been described at the outset.

Figure 2 shows transponder 1 according to the invention, the transponder cover 4 being cut in half along its middle for illustration.

Transponder 1 includes an integrated circuit 2 having at least a transceiver module 21, a data storage module 22, and an energy storage module 23 as well as an antenna 3 connected with the integrated circuit 2 for transmission and reception of a signal. Antenna 3 is designed as a coil antenna 31 with ferrite core 32, and is cylinder shaped. Integrated circuit 2 and the antenna are laid out in a linear array, the integrated circuit 2 being designed as a microchip on a miniature board and attached to antenna 3 as a longitudinal extension. The longitudinal axis of transponder 1 advantageously is essentially parallel to or coaxial with the longitudinal axis of coil antenna 31, this axis may also correspond to the line along which coil antenna 31 and integrated circuit 2 are arranged.

According to the invention, transponder 1 includes a time signal receiver 50 for receiving e.g. the long-wave time signal call sign of time signal service DCF77 at a frequency of 77.5 kHz, and is designed to derive time data from said DCF77 time signals. Antenna 3 is used as the time signal receiver antenna 51. Parts of the time signal receiver 50 may more particularly be placed on the board that also holds the integrated circuit, and may be connected with the integrated circuit.

The transceiver module 21 may for instance be tuned to transmit and receive signals at a frequency of 134.2 kHz. Antenna 3 then assumes a two-fold function according to the invention: both as an antenna for data transfer to a reader and as an antenna for receiving the time signals.

In view of this additional use of antenna 3 as time signal receiver antenna 51, the transponder parts can be included in a very space-saving manner in the miniature transponder cover 4, which has advantageous effects - belong others - for implantability, that is, for introduction of the transponder into a body.

Time data can now be derived for predefined points in time, particularly so at predefined time intervals or at predefined events, by the integrated time signal receiver 50. This may occur for instance, more particularly, for an interrogation time at which a reader transmits interrogation signals to the transponder, or for an acquisition time at which additional data are acquired by data acquisition elements.

The transponder cover 4 may be made e.g. of glass, plastic or ceramic, and have an essentially cylindrical shape with rounded ends. In view of the linear arrangement of coil antenna 31 and integrated circuit, wherein the coil antenna 31 is used in addition as time signal receiver antenna, these parts can be integrated with great space savings into the miniature transponder cover 4. As no internal clock module - implying the need of permanent power supply - is necessary, the lifetime of active transponders can be improved according to the invention.

Additional data acquisition elements - as for instance a thermometer and a barometer - may be placed onto the integrated circuit which comprises a transceiver module 21, data storage module 22, and energy storage module 23.

The transponder according to the invention may be used for all known transponder-applications, especially in cases where precise time information is of interest. For example, the derived time information may be linked together with measurement data gathered by a data acquisition element and indicate a gathering time of the data.

Exemplarily, the transponder may be embodied as bolus transponder and therefore comprise a ceramic cover, wherein the transponder is inserted into the stomach.

However, there are also various further applications for transponders according to the invention besides animal applications. Any kind of transponder, especially transponder with sensors, may use the time synchronization with an external clock.

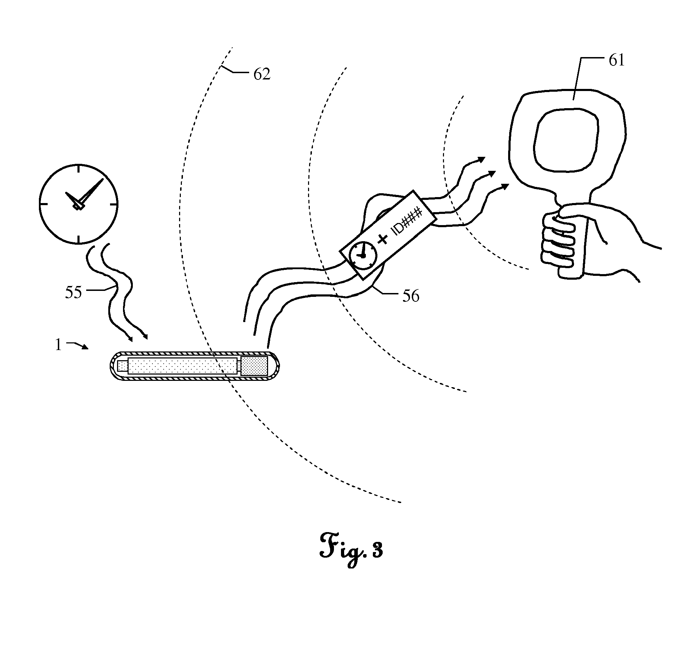

Figure 3 illustrates an exemplary application of the transponder according to the invention described in Figure 2.

Transponder 1 can be designed in such a way that responsive to received reader signals, it will derive time data and transmit them together with stored ID data.

Reader 61, possibly handheld, generates an electromagnetic field 62 in the vicinity of transponder 1. Not only data may then be sent to transponder 1 but the transponder may also be supplied with energy by electromagnetic induction. According to the invention, the time signal call sign DCF77 represented as first wavy arrows 55 can be received by the time signal receiver integrated into transponder 1, and time data can be derived from it. After that, the transponder ID can be transmitted to the reader together with time data which e.g. indicate the time of interrogation of the transponder, this transmission being shown by second wavy arrows 56.

Specifically, even passive transponders may be used here, in which case the current generated by electromagnetic induction for instance can be used for charging a short-term energy storage device such as a capacitor, so that enough power is available for powering the integrated circuit and the time signal receiver for the appropriate length of time and for transmitting the signals containing ID and time data to the reader.

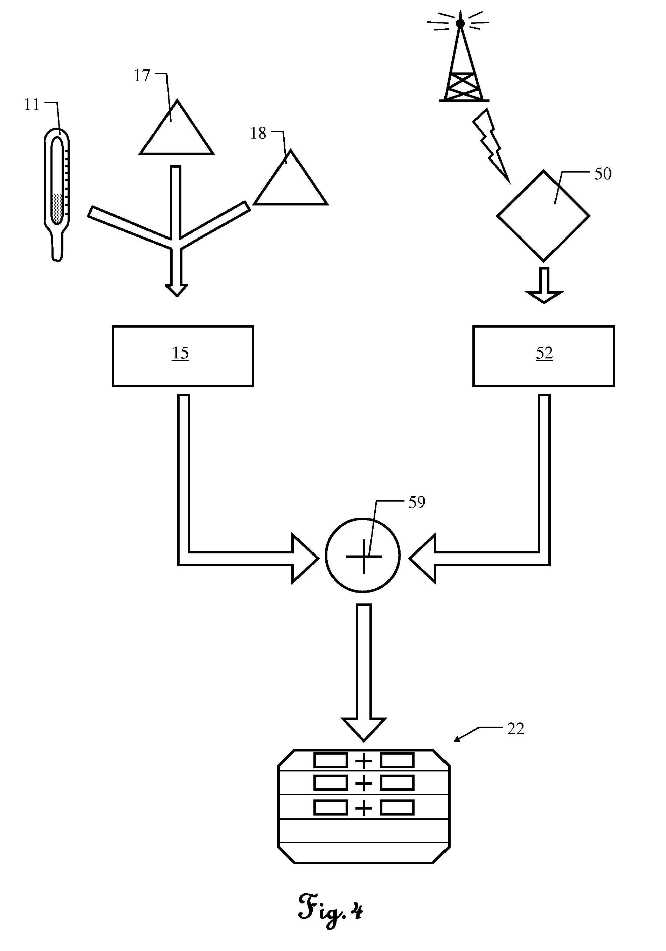

Figure 4 shows a diagram for exemplary processing of time data 52 derived by time signal receiver 50 in a transponder according to the invention that is designed as a semi-passive or active transponder and includes one or several data acquisition elements 11, 17, 18.

Specifically present as data acquisition elements 11, 17, 18 are a thermometer 11 and where applicable further sensors 17, 18. The data acquisition elements 11, 17, 18 or parts of them may more particularly be placed onto the same integrated circuit.

Generally, data acquisition elements such as, e.g., a hygrometer, a radiation sensor, a shock or vibration sensor, an optical sensor, a chemical analytical sensor, a medical analytical sensor, and/or further data acquisition elements known in the prior art may also be integrated as data acquisition elements into the transponder or linked with it.

Data acquisition elements 11, 17, 18 are each designed to acquire additional data 15. According to the invention, time data 52 may now for instance be derived for a point in time associated with the acquisition of additional data 15, and the two mutually assigned as pairs 59. The paired assignment 59 is represented as a plus sign in the schematic diagram that is shown. After that, the additional data 15 and the time data 52 that have been assigned to them may then be stored together in data storage module 22 having writable memory space for this purpose.

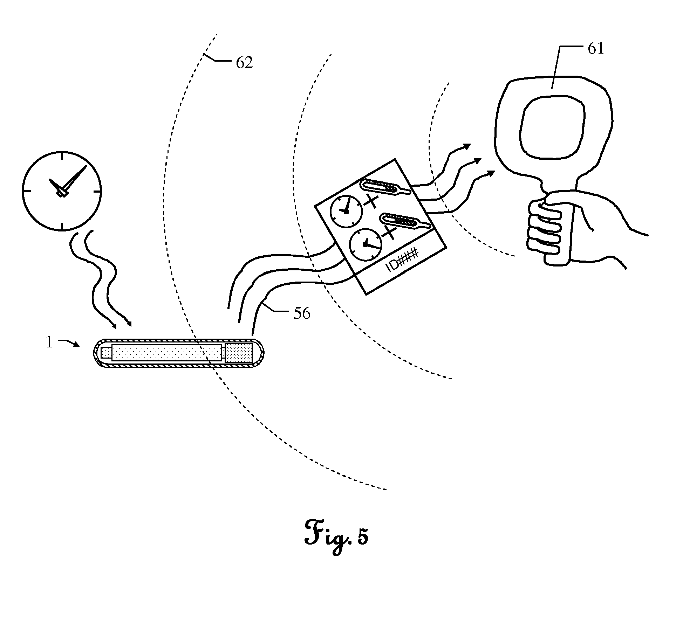

The data stored in data storage module 22 of the transponder, and in particular the ID data as well as the additional data, all associated with time data, may be interrogated by a reader when needed. This process is illustrated in Figure 5. Here the transponder responds to an interrogation signal 62 of reader 61, by transmitting to the reader 61, data stored in the data storage module, and in particular the ID data as well as acquired additional data, all associated with time data, which is illustrated by the second wavy arrows 56.

The figures shown do of course only represent examples of possible embodiments in a schematic way.

## Claims

1. Transponder (1) with
• an integrated circuit (2) comprising at least
□ a transceiver module (21) and
□ a data storage module (22) for providing data,
• an antenna (3) connected with the integrated circuit (2) for receiving and transmitting a radiofrequency signal, and
• a transponder cover (4),
**characterized by**
a time signal receiver (50) having a time signal receiver antenna (51) arranged within transponder cover (4), wherein the time signal receiver (50) is designed for deriving time data (52) from an external reference time-signal and providing the time data (52) to the integrated circuit (2).

2. Transponder (1) according to claim 1,
**characterized in that**
the antenna (3) is designed as a coil antenna (31), in particular with a ferrite core (32), and is cylinder-shaped.

3. Transponder (1) according to claim 1 or 2,
**characterized in that**
the antenna (3) is used as the time signal receiver antenna (51).

4. Transponder (1) according to one of the preceding claims,
**characterized in that**
the time signal receiver (50) is designed for receiving
• a time signal of a time service, in particular that of time signal call sign DCF77 at a frequency of 77.5 kHz,
• a Radio Data Systems time signal associated with a radio signal, in particular at a frequency in the FM range, or
• a Global Navigation Satellite System time signal associated with GNSS-signals.
• a Global System for Mobile Communication time signal associated with GSM-signals.

5. Transponder (1) according to one of the preceding claims,
**characterized in that**
the integrated circuit (2) includes an energy storage module (23) for power supply to, amongst others, the time signal receiver (50).

6. Transponder (1) according to one of the preceding claims,
**characterized in that**
the data storage module (22) has writable memory space, in particular for the storage of time data (52).

7. Transponder (1) according to one of the preceding claims,
**characterized in that**
the time data (52) are derived for specified points in time, particularly for specified time intervals or events.

8. Transponder (1) according to one of the preceding claims,
**characterized in that**
the transponder (1) includes one or several data acquisition elements (11,17,18) for the acquisition of additional data (15).

9. Transponder (1) according to claim 8,
**characterized in that**
at least one of the following:
• a thermometer (11),
• a barometer,
• a GNSS receiver,
• a chemical analytical sensor, or
• a medical analytical sensor
is present as the one or several data acquisition elements (11,17,18).

10. Transponder (1) according to claim 8 or 9,
**characterized in that**
the time data (52) are derived in each instance for a point in time associated with the acquisition of additional data (15), and in particular, the additional data (15) and the time data (52) derived for them in each case are mutually assigned as pairs and stored together in the data storage module (22).

11. Method for providing time data (52) within a transponder (1),
the transponder (1) including
• an integrated circuit (2) with at least
□ a transceiver module (21) and
□ a data storage module (22) for providing data,
• an antenna (3) connected with the integrated circuit (2), for receiving and transmitting a signal,
• a transponder cover (4), and
• a time signal receiver (50) arranged within the transponder cover (4),
with the steps:
• receiving external reference time signals of a time signal service by the time signal receiver (50) and
• deriving time data (52) from the time signals received and making them available.

12. Method according to claim 11,
wherein the transponder (1) including one or several data acquisition elements (11,17,18) for the acquisition of additional data (15),
**characterized in that**
the time data (52) are derived in each instance for a point in time associated with the acquisition of additional data (15), and in particular, the additional data (15) and the time data (52) derived for them in each case are mutually assigned as pairs and stored together in the data storage module (22).
